# FASCICULE DE BREVET EUROPEEN

(11) **EP 0 593 354 B1**
(45) Date de publication et mention de la délivrance du brevet: **29.03.2000**
(21) Numéro de dépôt: 93402510.7
(22) Date de dépôt: 11.10.1993
(51) Int. Cl.: G06F 17/30

(54) **Procédé d'aide à l'optimisation d'une requête d'un système de gestion de base de données relationnel**
Abfrageoptimierungsverfahren für ein relationelles Datenbankverwaltungssystem
Query optimisation method for a relational database management system

(30) Priorité: 12.10.1992 FR 9212148
(43) Date de publication de la demande: 20.04.1994
(73) Titulaire: BULL S.A., 92800 Puteaux (FR)
(72) Inventeur: Vachey, Eric, F-75014 Paris (FR)
(74) Mandataire: Denis, Hervé

(56) Documents cités:
- PROCEEDINGS OF THE FIFTH INTERNATIONAL CONFERENCE ON DATA ENGINEERING 10 Février 1989 , LOS ANGELES, CALIFORNIA, US pages 590 - 597 BENG CHIN OOI ET AL. 'Extending a DBMS for geographic applications'

## Description

L'invention se rapporte à un procédé d'aide à l'optimisation d'une requête d'un système de gestion de base de données relationnel, désigné plus couramment par son acronyme SGBDR. Elle s'applique plus particulièrement à l'administration du SGBDR.

Une base de données peut être définie comme étant un ensemble intégré de données modélisant un univers donné. Les données utilisées par des applications diverses sont regroupées dans une même base de façon à éviter les problèmes de duplication des données. A une base de données est associé un schéma conceptuel qui décrit la structure et le type des données qu'elle contient et les contraintes qui doivent être toujours vérifiées. L'administrateur de la base de données a la charge de veiller à la vérification de ces contraintes.

L'administration des données a trois rôles. D'abord, elle définit les utilisateurs de la base de données, en leur donnant un nom, un mot de passe et un ensemble de privilèges ou droits pour accéder aux données. Elle définit aussi le ou les administrateurs, qui sont les personnes habilitées à faire en partie ou en totalité l'administration de la base de données. Le second rôle de l'administration est d'attribuer à l'administrateur la définition ou de le faire participer à la définition du schéma conceptuel de la base de données. L'administrateur définit donc les schémas des différentes tables et les règles relatives à ces tables. Dans son dernier rôle, l'administrateur a la possibilité de tirer profit en termes de performance, d'intégrité et de sécurité du schéma conceptuel de la base et du SGBDR. C'est sur ce troisième rôle que porte essentiellement l'objet de la présente invention.

Lors du développement d'une application du SGBDR, un administrateur a pour rôle d'optimiser l'utilisation des ressources du SGBDR. Quand une requête est faite lors de l'application, le SGBDR choisit un chemin d'accès pour l'exécution de la requête. Pour optimiser les performances de l'application, l'administrateur doit analyser les requêtes émises et décider de l'action à prendre. Son action peut être de changer la forme de la requête et/ou de créer ou supprimer des index sur les tables concernées. Sa décision dépend des informations lui indiquant si la forme actuelle de la requête est suffisante ou non, ou si les index existants sont pertinents.

Les index sont physiquement indépendants des données et peuvent ainsi être supprimés et créés à tout moment. Un index est utilisé lors de l'accès aux données, indépendamment de celui qui l'a créé. Une table peut avoir plusieurs index en même temps. Un compromis est à trouver entre le nombre d'index et la surcharge (overhead) causée par leur mise à jour. Un index peut porter sur plusieurs colonnes et dans ce cas il peut assurer l'unicité des colonnes utilisées. Il améliore aussi les performances des requêtes dont la condition de sélection fait intervenir plusieurs colonnes. Une requête avec plusieurs prédicats peut utiliser des index multiples s'ils sont uniques, si les prédicats sont des égalités et sont définis sur la même table. Dans ce cas, les résultats partiels provenant de chaque index sont fusionnés pour constituer le résultat définitif. Certains SGBDR peuvent utiliser les propriétés des index et les caractéristiques des colonnes pour décider quel index prendre et éviter ainsi l'opération de fusion. L'utilisation ou non d'un index est décidée par l'optimiseur du SGBDR. La décision varie selon le type de SGBDR.

D'autre part, le schéma d'un SGBDR peut évoluer dynamiquement. Par exemple, un ou plusieurs champs peuvent être ajoutés à une table, des index peuvent être créés sur une table. Dans ce contexte, il peut s'avérer que le SGBDR ne passe pas par un index qu'il devrait utiliser ou qu'il passe par un index qu'il ne devrait pas utiliser si, par exemple, on accède à plus de 10% des articles. Dans ce dernier cas l'index devient pénalisant. A cause de toutes les possibilités de choix du SGBDR pour établir son plan, on estime que l'exploitation des ressources peut varier dans un rapport de 1 à 10 000 selon la formule de la requête et le choix des index.

Actuellement, l'optimisation d'une requête est compliquée. D'abord, elle n'est pas automatique et il faut avoir recours à des outils spécifiques du SGBDR pour demander le plan d'exécution de la requête. Ce plan est l'enchaînement des opérations qui seront exécutées par le serveur de base de données pour traiter la requête. Pour demander ce plan, l'utilisateur doit écrire la requête dans le langage de requête du SGBDR. L'écriture de la requête demande donc une bonne connaissance du langage de requête du SGBDR. De plus, elle est rigoureuse et ardue et se traduit par une grande perte de temps aggravée par les risques d'erreur qui s'ensuivent. En réponse, le SGBDR fournit, sous une forme variable selon le SGBDR, les résultats de la demande du plan d'exécution de la requête. Le plan est écrit dans le langage de requête du SGBDR et se présente par exemple couramment sous la forme d'une longue table à colonnes multiples. La table est écrite en mode ligne et ne peut apparaître que page à page sur l'écran. L'analyse de la table est alors très compliquée et l'utilisateur la facilite ordinairement en demandant une impression de la table sur papier. Il doit donc recourir à tous les processus d'impression spécifiques au terminal. L'impression se fait page à page, avec rappel des titres des colonnes à chaque page. Par conséquent, l'administrateur doit décrypter dans le langage codé la hiérarchie du traitement de la requête et reconstituer le plan par analyse de nombreuses colonnes et d'un grand nombre de lignes désordonnées dans différentes pages. Cette recherche est donc longue et pénible. En outre, l'administrateur ne dispose pas d'une vue globale du plan, qui serait ordinairement trop longue à obtenir et trop pénalisante par rapport à l'avantage qu'il en tirerait. L'administrateur doit cependant surmonter tant bien que mal cet inconvénient pour décider de la façon d'optimiser la requête. Si par exemple il modifie la requête, il faut qu'il réécrive la requête modifiée, qu'il analyse la nouvelle table et qu'il la compare avec l'ancienne table. Les outils utilisés pour créer une table d'analyse ne gardent pas en mémoire la table précédente et il faut donc l'imprimer de façon à pouvoir s'y référer pour faire la comparaison avec la nouvelle table. La comparaison consiste donc en pratique à cumuler les analyses longues et difficiles des deux tables. Enfin, il manque à l'administrateur une visualisation d'informations sur les objets utilisés lors du traitement. On comprend dans ces conditions que l'optimisation d'une requête est difficile à atteindre rapidement, même pour un administrateur compétent.

Le but de l'invention est de faciliter la visualisation et l'interprétation du plan d'exécution d'une requête, afin de pouvoir optimiser rapidement et à moindre coût le traitement de la requête. De préférence, un autre but de l'invention est de fournir des informations additionnelles sur les objets de la requête. Un autre but optionnel de l'invention est d'aider simplement et rapidement un utilisateur, même non spécialiste du langage de requête du SGBDR, à optimiser au mieux l'exécution de la requête.

L'invention a pour objet un procédé d'aide à l'optimisation d'une requête d'un SGBDR, tel que défini par la revendication 1.

Ce procédé a le double avantage d'offrir une représentation graphique du plan d'exécution de la requête et d'être indépendant de l'optimiseur et du langage de requête du SGBDR. Selon une variante de réalisation préférée de ce procédé, cette aide à l'optimisation peut même être apportée à tout utilisateur qui ne connait pas le langage de requête du SGBDR.

Les caractéristiques et avantages de l'invention ressortiront de la description qui suit, donnée à titre d'exemple et illustrée dans les dessins annexés.

Dans les dessins :
- la figure 1 illustre à titre d'exemple de l'art antérieur une table représentative du plan d'exécution écrit dans le langage de requête d'un SGBDR et relatif à la requête représentée sur la figure 2C ;
- les figures 2A, 2B et 2C illustrent des écrans d'accueil obtenus d'un outil conforme à l'invention mettant en oeuvre le procédé de l'invention ;
- la figure 3 illustre un exemple d'arbre d'exécution de la requête représentée sur la figure 2C, obtenu par la mise en oeuvre du procédé conforme à l'invention pour l'aide à l'optimisation de la requête ; et
- les figures 4A, 4B et 4C illustrent des histogrammes pouvant être obtenus par la mise en oeuvre du procédé conforme à l'invention.

Pour des raisons de clarté et de simplicité, la description portera sur un exemple non limitatif de SGBDR connu sous la marque déposée Oracle V6, produit par la société Oracle Corp, utilisant le langage normalisé SQL (Structured Query Language) et opérant sur une station Unix, marque déposée par la société American Telephone and Telegraph. L'exemple illustré concernera les requêtes de type SELECT de ce SGBDR, étant bien entendu que cet exemple n'est limitatif ni à ce type dans ce SGBDR ni aux autres SGBDR.

L'architecture fonctionnelle d'Oracle est organisée en quatre couches concentriques, qui sont successivement à partir du centre : le noyau, le dictionnaire, la couche SQL et la couche externe. Les trois premières couches sont appelées couches fondamentales.

Le noyau communique avec la base de données et peut se connecter avec d'autres noyaux dans un environnement de base de données réparties. L'une de ses fonctions essentielles est l'exécution optimale des requêtes, grâce à un optimiseur intégré de requête SQL.

Le dictionnaire des données est une métabase. Il est constitué d'un ensemble de tables et de vues qui sont manipulées à l'aide du langage SQL. Son contenu reflète une image de la base à tout instant et donne ainsi une description dynamique de la base de données. Il permet de décrire notamment les objets de la base (tables, colonnes, vues, index, ...), les privilèges et les droits des utilisateurs sur les différents objets. Le dictionnaire est utilisé pour l'administration de la base de données si l'utilisateur a un privilège d'administration. Un utilisateur est considéré comme administrateur s'il a le privilège DBA. Lors de l'installation du système, deux utilisateurs sont considérés comme administrateurs : SYS et SYSTEM. Seul l'administrateur SYS a accès aux tables du dictionnaire de données.

La couche SQL est la dernière couche fondamentale d'Oracle. Elle joue le rôle d'interface entre le noyau et les outils de la couche externe. Ainsi, toute opération d'accès aux données est exprimée en langage SQL.

Enfin, la couche externe est composée d'outils facilitant le développement d'applications et l'utilisation de toutes les fonctionnalités offertes par les trois couches fondamentales. L'un de ces outils est SQL*Plus, qui est une interface interactive de quatrième génération avec la couche SQL. Toute commande SQL peut être lancée de SQL*Plus. Il permet notamment le paramétrage de l'environnement de travail (longueur d'une ligne par pages, nombre de lignes par page,...) et le formatage des résultats des requêtes SQL sur écran ou sur papier. Un autre outil est SQL*DBA orienté vers l'administration de la base de données.

Pour la bonne compréhension de la présente description, on rappellera aussi brièvement les opérations importantes d'Oracle :
- INDEX :: fait un accès à un index. Cette opération peut apparaître seule ou suivie d'une opération TABLE ACCESS, selon que les valeurs de l'index sont utilisées directement ou servent à sélectionner des tuples de la table.
- NESTED LOOPS :: pour chaque tuple venant du premier fils, on fait le produit cartésien avec les tuples venant du second fils.
- TABLE ACCESS :: fait un accès à une table et peut faire des restrictions.

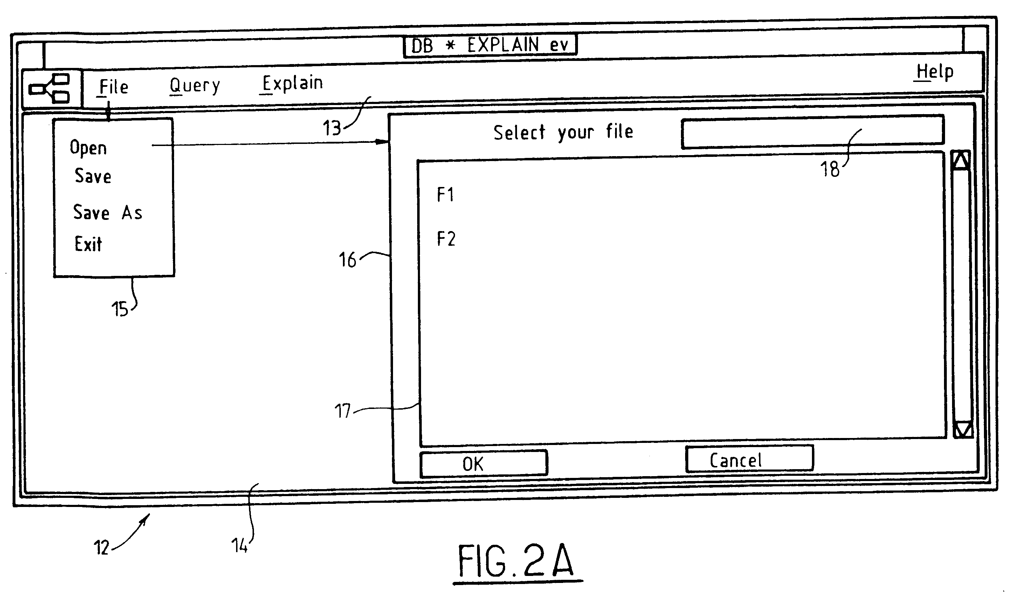

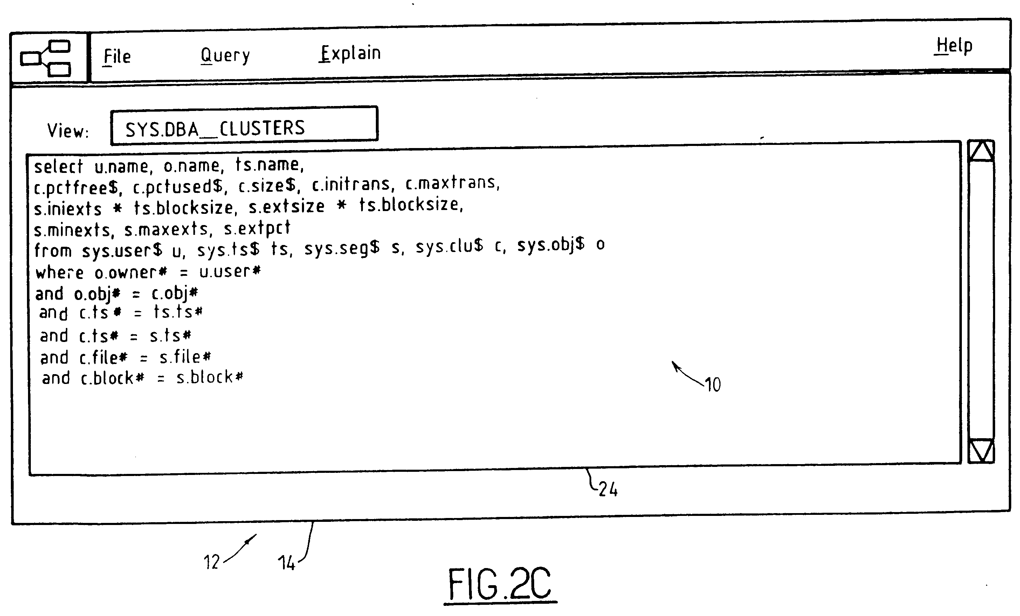

Le procédé classique d'aide à l'optimisation d'une requête d'un SGBDR comprend la recherche d'un plan d'exécution de la requête écrit dans le langage de requête du SGBDR. La figure 2C présente dans une fenêtre d'écran un exemple de requête 10 écrite dans le langage de requête SQL d'Oracle. Dans Oracle, la recherche du plan d'exécution de la requête 10 peut se faire en utilisant l'outil SQL*Plus ou SQL*DBA. On écrit la requête 10 et, en réponse, l'outil construit une table représentative du plan choisi par le noyau du SGBDR pour l'exécution de la requête. Cette table doit être préalablement créée par l'utilisateur et peut être consultée par les commandes SQL de sélection.

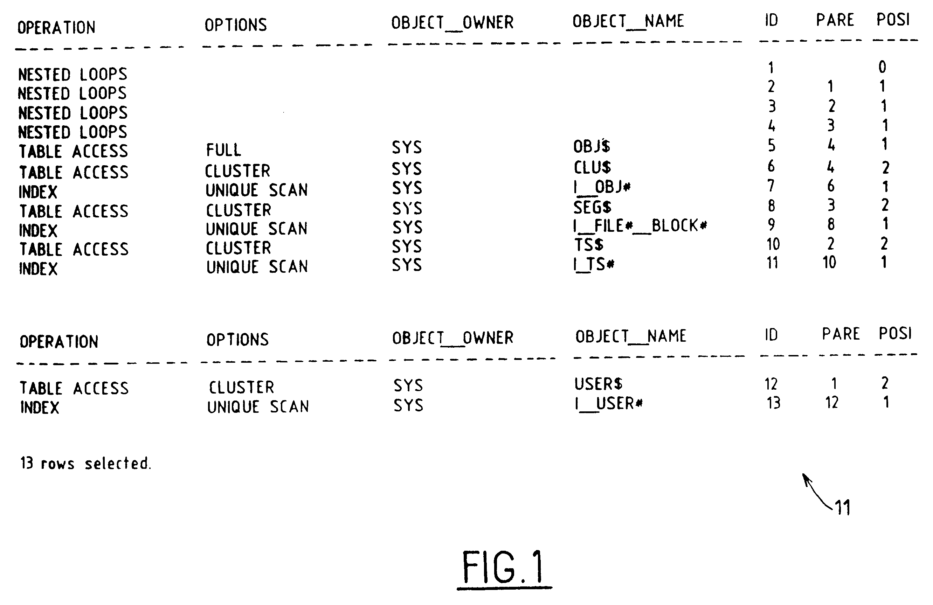

La figure 1 illustre un exemple, très court pour la commodité de l'exposé, d'une table 11 obtenue par impression page à page de la table correspondante qui a été créée par le SGBDR sur demande de l'utilisateur. La table 11 se compose de deux pages rappelant chacune les titres des sept colonnes représentatives successivement des opérations (OPERATION), des options (OPTION), du propriétaire de l'objet (OBJECT_OWNER), du nom de l'objet (OBJECT_NAME), et pour chaque opération, son numéro (ID), le numéro de l'opération qui la précède (PARE) et sa position (POSI) si l'opération a des opérations soeurs. La simple requête 10 illustrée dans la figure 2C donne une idée d'une table relative à une requête ordinaire et fait bien ressortir le grave problème qu'elle pose à l'utilisateur pour optimiser l'exécution de la requête. Dans la pratique, seul l'utilisateur compétent qu'est l'administrateur peut interpréter cette table. On comprend aussi que même pour l'administrateur l'interprétation de la table est en règle générale longue et pénible. En outre, il n'a de cette façon aucune vision globale du plan d'exécution. L'invention présente une solution évitant le recours d'une personne ayant des connaissances très élevées de l'administration d'un SGBDR.

Selon une caractéristique de l'invention, un outil de recherche appelé DB*EXPLAIN a été créé pour d'abord proposer à l'utilisateur de créer automatiquement la table représentative du plan d'exécution d'une requête. Selon un avantage accessoire de cet outil, l'administrateur n'a pas à écrire une requête dans le langage SQL.

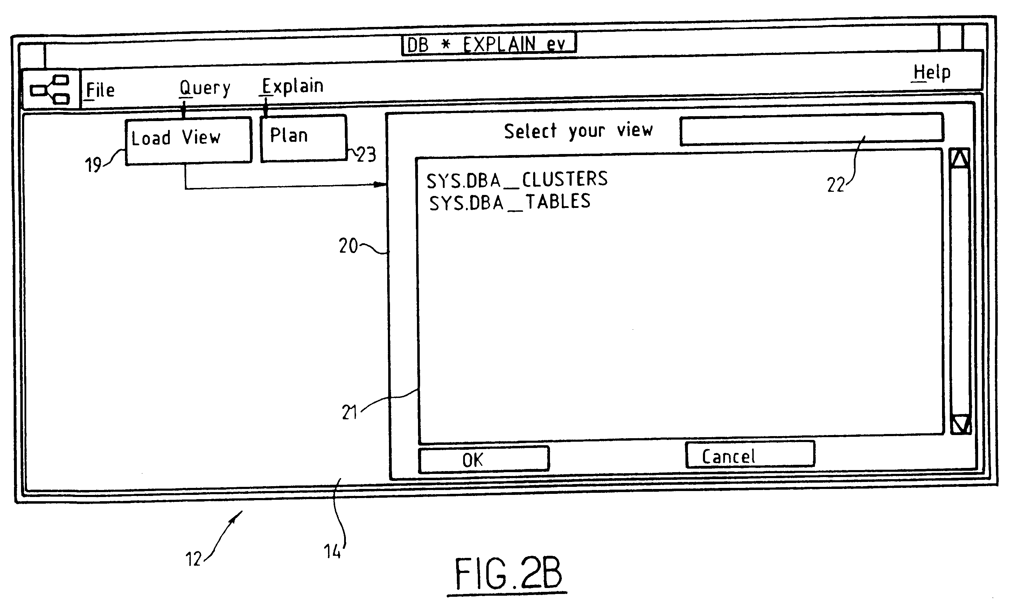

Les figures 2A, 2B et 2C illustrent à titre d'exemple un écran d'accueil 12 de l'outil DB*EXPLAIN. Cet exemple a été créé en utilisant le logiciel OSF/Motif, marque déposée de Open Software Foundation, Inc aux U.S.A. L'écran 12 contient une barre de menus 13 et une fenêtre de dialogue 14. La barre de menus 13 comprend trois menus principaux File, Query et Explain. Le menu 15 de File est représenté sur la figure 2A et se rapporte aux requêtes contenues dans des fichiers. Il présente quatre options Open, Save, Save As et Exit. En cliquant sur l'option Open, une fenêtre de sélection 16 se présente dans la fenêtre de dialogue 14. La fenêtre de sélection 16 incorpore de façon normalisée une liste déroulante 17 des fichiers courants (F1, F2, ...) contenant des requêtes et un pavé 18 permettant d'écrire le nom d'un fichier à sélectionner. En cliquant sur l'option Save du menu 15 de File, on sauve le fichier désiré sous le nom qu'il porte déjà. En cliquant sur l'option Save As, on sauve le fichier désiré sous le nom choisi et écrit par l'utilisateur. Enfin, on clique sur l'option Exit pour sortir de DB*EXPLAIN.

La figure 2B illustre à titre d'exemple le menu 19 de Query dans l'écran d'accueil 12. Il n'incorpore qu'une option Load View servant à ouvrir une fenêtre de sélection 20 incorporant une liste déroulante 21 des vues contenues dans le dictionnaire du SGBDR comme autre source de requêtes (vues SYS.DBA_CLUSTERS et SYS.DBA_TABLES dans l'exemple illustré) et un pavé 22 permettant d'écrire le nom d'une vue désirée. La figure 2B fait aussi apparaître le menu 23 d'Explain, qui incorpore seulement l'option Plan. En cliquant sur cette option, l'outil DB*EXPLAIN construit, avantageusement de la même façon que les outils SQL*Plus et SQL*DBA, une table représentative du plan d'exécution de la requête. Il serait évidemment possible d'adapter l'outil DB*EXPLAIN pour qu'il puisse représenter cette table dans une fenêtre d'édition, de la même manière que la table 11 représentée sur la figure 1. Cependant, le procédé de l'invention adapté à l'exemple illustré n'a besoin que de la table pour fournir une représentation du plan d'exécution nettement meilleure que la table 11 illustrée, de sorte qu'en pratique cette représentation est superflue.

La figure 2C illustre une fenêtre d'édition 24 produite dans la fenêtre de dialogue 14 pour la représentation d'une requête issue d'un fichier sélectionné dans la liste déroulante 17 ou défini dans le pavé 18 de l'écran illustré dans la figure 2B, ou de la vue sélectionnée dans la liste déroulante 21 ou définie dans le pavé 22 de la figure 2B. La figure 2C illustre dans la fenêtre d'édition 24 la requête 10 qui est présentée à titre d'exemple en ayant sélectionné la vue SYS.DBA_CLUSTERS dans la liste 21 de la figure 2B. Cette vue se rapporte aux clusters de la base de données et appartient à l'administrateur SYS. Grâce à l'outil DB*EXPLAIN, il n'est donc plus besoin d'écrire une requête déjà disponible. Cet outil offre donc l'avantage majeur de n'avoir pas à concevoir et réécrire la requête et d'éviter tous les risques d'erreur et les pertes de temps qui s'ensuivent. Un autre avantage est de pouvoir modifier directement et facilement le contenu de la requête qui se présente dans la fenêtre d'édition 24, grâce à l'utilisation, dans le mode de réalisation choisi à titre d'exemple préféré, du logiciel OSF/Motif.

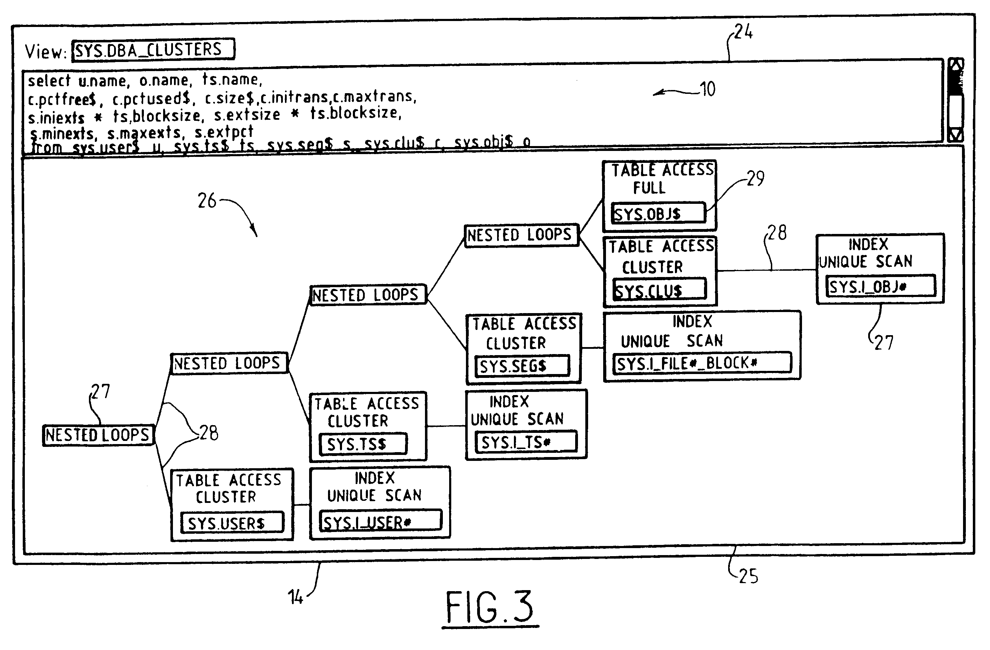

L'invention consiste à construire, à partir du plan d'exécution de la requête 10, un arbre d'exécution de la requête et à représenter l'arbre sur un écran. Dans l'écran représenté sur la figure 3, une fenêtre 25 contient un arbre 26 représentatif du d'exécution de la requête 10. L'arbre 26 est fait de boîtes 27 reliées entre elles par des liens 28. La construction des liens 28 de l'arbre 26 a été faite par analyse du résultat de la demande du plan d'exécution de la requête écrit dans le langage de requête du SGBDR, ce résultat étant la table 11 pour le SGBDR choisi à titre d'exemple. L'analyse de la requête 10 a été avantageusement faite en pratique par des structures en langage C qui pointent sur des structures affiliées pour construire un graphe purement logiciel. Selon un exemple très simple et suffisant à lui seul pour la mise en oeuvre du procédé conforme à l'invention, la structure associée à chacun des noeuds constitués par les boîtes 27 de l'arbre 26 peut être simplement produite à partir de la table produite par Explain Plan sous la forme suivante :

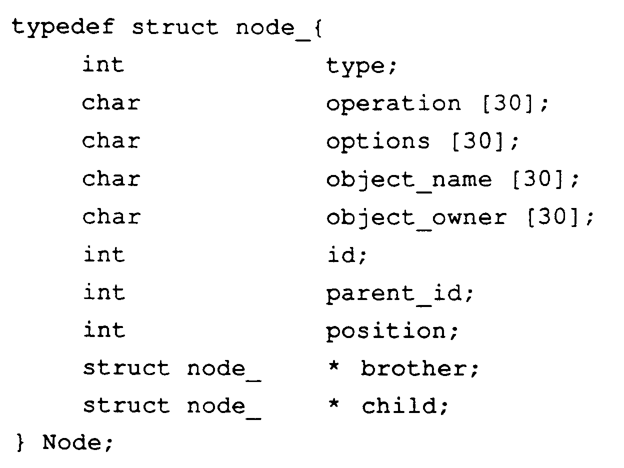

A chaque fois qu'un tuple est rendu, une des boîtes 27 est créée de manière classique et aisée par l'homme du métier en utilisant par exemple une fonction des bibliothèques graphiques du logiciel OSF/Motif. En résumé, dans l'arbre 26 illustré les boîtes 27 et leurs liens 28 ont été créés par analyse de la requête 10 dans la table 11 représentative du plan d'exécution. Dans l'exemple illustré dans la figure 3, la fenêtre 25 de présentation de l'arbre 26 est avantageusement fournie par l'outil DB*EXPLAIN sous l'option Plan et accompagnée du nom de la vue et de la fenêtre 24 d'édition de la requête 10 qui ont été représentés sur la figure 2C.

L'arbre 26 peut incorporer tout ou partie des informations résultant de la recherche du plan d'exécution de la requête écrit dans le langage de requête du SGBDR, telles que les informations contenues dans la table 11 de la figure 1. Par exemple, chaque boîte 27 porte en titre le nom de l'opération concernée par cette boîte. Ainsi, on retrouve dans la figure 3 les noms NESTED LOOPS, TABLE ACCESS et INDEX indiqués dans la colonne OPERATION de la table 11 de la figure 1. Si l'opération constituant le titre d'une boîte 27 a une option s'exécutant sur un objet donné, le nom de cette option peut être mentionné dans la boîte, avantageusement en sous-titre. De même, si l'opération mentionnée en titre dans une boîte 27 présente des caractéristiques, telles que le nom de l'objet et le nom du propriétaire de l'objet sur lequel s'applique l'option de l'opération, on peut indiquer dans la boîte tout ou partie de ces caractéristiques. Toutes ces options avantageuses de l'invention sont contenues dans l'arbre 26 représenté sur la figure 3. On retrouve ainsi dans les treize boîtes 27 de l'arbre 26 les noms des treize opérations mentionnées dans la table 11, complétées par l'option éventuelle qui s'exécute sur un objet donné, le nom de l'objet et le nom du propriétaire de l'objet. L'arbre 26 offre l'avantage d'être facilement compris de tout utilisateur, indépendamment de ses connaissances du langage de requête du SGBDR, et de lui fournir une vision globale du plan d'exécution de la requête. L'utilisateur qui est en présence de l'arbre 26 peut donc décider plus facilement et rapidement de son action pour optimiser la requête qui a été faite. D'autre part, grâce à l'outil DB*EXPLAIN, on a vu que l'utilisateur pouvait ne pas écrire la requête et la modifier facilement dans la fenêtre d'édition 24 de la figure 2C. Après modification, l'administrateur peut avoir très vite le nouvel arbre d'exécution pour se rendre compte de l'efficacité de sa modification. L'outil offre l'avantage supplémentaire de conserver l'arbre précédent et de permettre ainsi à l'administrateur de comparer facilement et rapidement les deux arbres.

Bien entendu, ces avantages pourraient aussi être offerts en n'utilisant pas l'outil DB*EXPLAIN, et en utilisant les moyens classiques de recherche du plan d'exécution d'une requête dans le langage de requête du SGBDR. Les résultats de cette recherche sont présentés dans une table 11 dans le SGBDR choisi à titre d'exemple, mais il est clair qu'ils peuvent se présenter sous une autre forme selon le type de SGBDR. L'analyse de ces résultats sera adaptée aisément à leur forme par l'homme du métier pour créer un arbre d'exécution de la requête.

Selon une autre caractéristique de l'invention, d'autres informations que celles fournies par l'analyse des résultats de la demande du plan d'exécution peuvent être obtenues. Par exemple, il est possible d'obtenir des informations additionnelles sur certaines caractéristiques éventuelles d'une opération. Dans l'exemple illustré, le nom de l'objet sur lequel s'exécute l'opération constituant le titre d'une boîte 27 et éventuellement le propriétaire de cet objet sont écrits dans un bouton 29 inséré dans la boîte, de façon qu'en cliquant sur le bouton 29 un utilisateur puisse obtenir des informations additionnelles sur cet objet.

Dans le cas où l'opération qui s'exécute sur l'objet cliqué est une table (TABLE ACCESS dans les boîtes 27 de l'exemple illustré) la recherche des informations additionnelles est faite par exemple grâce à une requête SQL sur la table DBA_TAB_COLUMNS du dictionnaire d'Oracle. Cette table donne la structure d'une table contenue dans la base de données du SGBDR, c'est-à-dire le nom des colonnes avec notamment leurs types et leurs tailles. Les informations additionnelles peuvent ainsi être tout ou partie des éléments descriptifs de la table mentionnée dans la boîte. On peut donc obtenir par exemple la description de la table, le nom des colonnes et le type des colonnes. De préférence l'outil DB*EXPLAIN les affiche dans une fenêtre annexe non représentée.

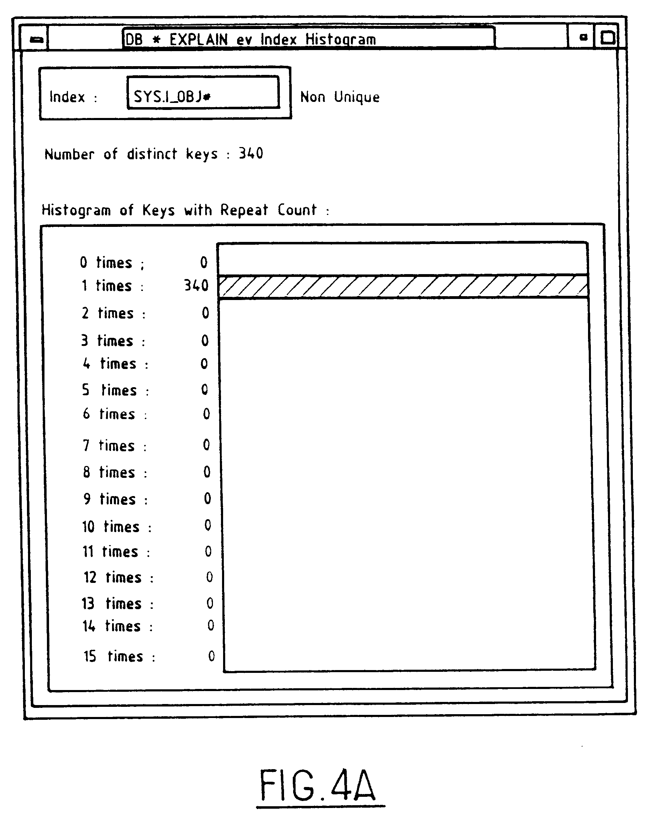

Si l'opération s'exécutant sur l'objet cliqué est un index (INDEX dans les boîtes 27), l'information additionnelle peut être un histogramme, tel que celui représenté sur la figure 4A. Les informations contenues dans cet histogramme ont été obtenues par la commande VALIDATE INDEX d'Oracle. En réponse, Oracle crée une table histogramme. A partir de la table histogramme, on forme, au moyen d'un petit programme ordinaire pour l'homme du métier, un écran représentatif de cet histogramme tel que celui illustré dans la figure 4A.

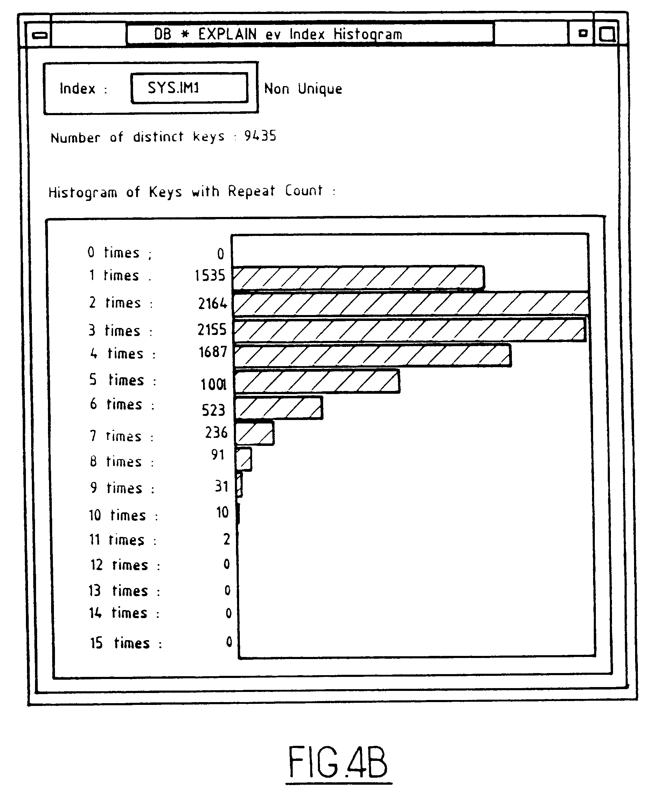

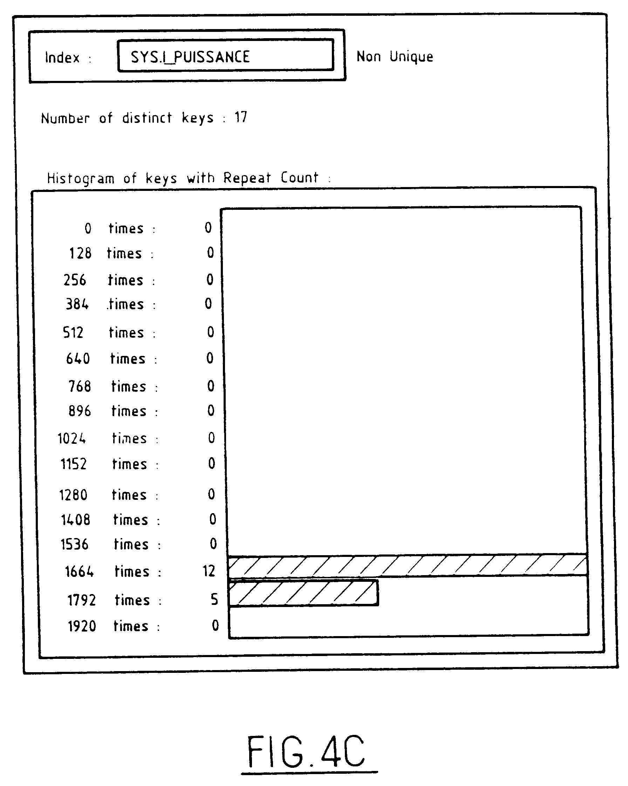

Dans l'exemple illustré dans la figure 4A, l'utilisateur sait que son index compte 340 clés qui ne sont pas répétées. L'utilisateur sait immédiatement que l'index choisi est très bon. Les figures 4B et 4C illustrent respectivement deux autres exemples d'histogrammes qui pourraient être obtenus grâce à l'invention. De l'exemple de la figure 4B, l'utilisateur sait que les index utilisés sont moins sélectifs que précédemment. La figure 4C est un histogramme représentatif d'un index très peu sélectif, et donc à changer. Ces exemples mettent bien en relief les avantages offerts par le procédé conforme à l'invention.

## Revendications

1. Procédé automatique d'aide à l'optimisation d'une requête (10) dans un système de gestion de base de données relationnel (SGBDR), le procédé utilisant des informations représentatives du plan d'exécution (11) de la requête, le plan d'exécution étant l'enchaînement des opérations à exécuter par ledit système (SGBDR) pour traiter la requête et la requête incluant lesdites informations, caractérisé en ce qu'il consiste à analyser lesdites informations pour y sélectionner au moins lesdites opérations et pour déterminer les liens (28) entre lesdites opérations, et à visualiser sur un écran (25) un arbre (26) représentatif du plan d'exécution et construit avec des boîtes (27) indiquant lesdites informations sélectionnées correspondantes, ainsi qu'avec lesdits liens (28) déterminés par ladite analyse.

2. Procédé selon la revendication 1, caractérisé en ce que lesdites informations se présentent sous la forme d'une table.

3. Procédé selon la revendication 1 ou 2, caractérisé en ce que chacune desdites caractéristiques se rapporte à un objet, par exemple le nom de l'objet et éventuellement le nom du propriétaire de l'objet sur lequel s'applique l'opération relative à une boîte.

4. Procédé selon l'une des revendications 1 à 3, caractérisé en ce qu'il consiste à écrire chaque caractéristique dans un bouton (29) de la boîte correspondante (27) et à visualiser sur l'écran des informations additionnelles sur la caractéristique quand le bouton est clique.

5. Procédé selon la revendication 4, caractérisé en ce que l'opération s'exécutant sur la caractéristique est une table et les informations additionnelles comprennent des éléments descriptifs de la table.

6. Procédé selon la revendication 4, caractérisé en ce que l'opération s'exécutant sur la caractéristique est un index et les informations additionnelles comprennent un histogramme.

7. Procédé selon l'une des revendications 1 à 6, caractérisé en ce que l'utilisation desdites informations représentatives du plan d'exécution consiste à les construire.

8. Procédé selon l'une des revendications 1 à 7, caractérisé en ce que l'utilisation des informations représentatives du plan d'exécution consiste à disposer de vues (figure 2B) contenant des requêtes et se trouvant dans le dictionnaire du système (SGBDR) et/ou de fichiers (figure 2A) contenant des requêtes, à sélectionner une vue ou un fichier et à représenter la vue ou le fichier sélectionné sur ledit écran.

9. Procédé selon l'une des revendications 1 à 8, caractérisé en ce qu'il consiste à représenter la requête sur l'écran et modifier le contenu de la requête de façon à optimiser le plan d'exécution de la requête.

## Claims

1. Automatic method for assistance with optimisation of a request (10) in a relational database management system (SGBDR), the method using information representing the execution plan (11) for the request, the execution plan being the chaining of the operations to be executed by said system (SGBDR) in order to process the request and the request including said information, characterised in that it consists in analysing said information in order to select from them at least said operations and to determine the links (28) between said operations, and in displaying on a screen (25) a tree (26) representing the execution plan, constructed with boxes (27) indicating said corresponding selected information, and also with said links (28) determined by said analysis.

2. Method according to Claim 1, characterised in that said information takes the form of a table.

3. Method according to Claim 1 or 2, characterised in that each of said characteristics relates to an object, for example the name of the object and, if appropriate, the name of the owner of the object to which the operation relating to a box applies.

4. Method according to one of Claims 1 to 3, characterised in that it consists in writing each characteristic into a button (29) of the corresponding box (27) and in displaying on the screen additional information on the characteristic when the button is clicked.

5. Method according to Claim 4, characterised in that the operation being executed on the characteristic is a table and the additional information comprises descriptive elements of the table.

6. Method according to Claim 4, characterised in that the operation being executed on the characteristic is an index and the additional information comprise a histogram.

7. Method according to one of Claims 1 to 6, characterised in that the use of said information representing the execution plan consists in constructing them.

8. Method according to one of Claims 1 to 7, characterised in that the use of the information representing the execution plan consists in having views (Figure 2B) containing requests and located in the dictionary of the system (SGBDR) and/or files (Figure 2A) containing requests, in selecting a view or a file and in showing the view or the selected file on said screen.

9. Method according to one of Claims 1 to 8, characterised in that it consists in showing the request on the screen and modifying the content of the request so as to optimise the execution plan for the request.

## Patentansprüche

1. Automatisches Verfahren zur Unterstützung der Optimierung einer Anfrage (10) in einem System (SGBDR) zum Verwalten einer relationalen Datenbank, wobei das Verfahren Informationen verwendet, die die Ausführungsebene (11) der Anfrage repräsentieren, wobei die Ausführungsebene die Verknüpfung von Operationen ist, die von dem System (SGBDR) auszuführen sind, um die Anfrage zu verarbeiten, und wobei die Anfrage diese Informationen enthält, dadurch gekennzeichnet, daß es darin besteht, diese Informationen zu analysieren, um daraus wenigstens die Operationen zu wählen und um die Verbindungen (28) zwischen diesen Operationen zu bestimmen, und auf einem Bildschirm (25) einen Baum (26) anzuzeigen, der die Ausführungsebene repräsentiert und aus Feldern (27), die die entsprechenden gewählten Informationen angeben, sowie aus Verbindungen (28), die durch die Analyse bestimmt werden, konstruiert ist.

2. Verfahren nach Anspruch 1, dadurch gekennzeichnet, daß die Informationen in Form einer Tabelle vorliegen.

3. Verfahren nach Anspruch 1 oder 2, dadurch gekennzeichnet, daß sich jede der Eigenschaften auf ein Objekt bezieht, beispielsweise der Name des Objekts und eventuell der Name des Eigentümers des Objekts, auf das die mit einem Feld in Beziehung stehende Operation angewendet wird.

4. Verfahren nach einem der Ansprüche 1 bis 3, dadurch gekennzeichnet, daß es darin besteht, jede Eigenschaft in eine Schaltfläche (29) des entsprechenden Feldes (27) zu schreiben und auf dem Bildschirm zusätzliche Informationen über die Eigenschaft anzuzeigen, wenn die Schaltfläche angeklickt wird.

5. Verfahren nach Anspruch 4, dadurch gekennzeichnet, daß die für die Eigenschaft ausgeführte Operation eine Tabelle ist und die zusätzlichen Informationen Beschreibungselemente der Tabelle enthalten.

6. Verfahren nach Anspruch 4, dadurch gekennzeichnet, daß die Operation für die Eigenschaft ein Index ist und daß die zusätzlichen Informationen ein Histogramm enthalten.

7. Verfahren nach einem der Ansprüche 1 bis 6, dadurch gekennzeichnet, daß die Verwendung der die Ausführungsebene repräsentierenden Informationen darin besteht, sie zu konstruieren.

8. Verfahren nach einem der Ansprüche 1 bis 7, dadurch gekennzeichnet, daß die Verwendung der die Ausführungsebene repräsentierenden Informationen darin besteht, Ansichten (Fig. 2B), die Anfragen enthalten und sich im Wörterbuch des Systems (SGBDR) befinden, und/oder Dateien (Fig. 2A), die Anfragen enthalten, anzuordnen, eine Ansicht oder eine Datei zu wählen und die gewählte Ansicht oder Datei auf dem Bildschirm darzustellen.

9. Verfahren nach einem der Ansprüche 1 bis 8, dadurch gekennzeichnet, daß es darin besteht, die Anfrage auf dem Bildschirm darzustellen und den Inhalt der Anfrage in der Weise zu modifizieren, daß die Ausführungsebene der Anfrage optimiert wird.
